# EUROPEAN PATENT SPECIFICATION

(11) **EP 1 854 965 B1**
(45) Date of publication and mention of the grant of the patent: **21.10.2009**
(21) Application number: 07008832.3
(22) Date of filing: 02.05.2007
(51) Int. Cl.: F01L 3/08, F16J 15/32

(54) **Oil seal**
Öldichtung
Joint à huile

(30) Priority: 02.05.2006 JP 2006128134
(43) Date of publication of application: 14.11.2007
(73) Proprietor: Carl Freudenberg KG, 69469 Weinheim (DE)
(72) Inventor: Hamamoto, Kokichi, Fukushima-shi Fukushima 960-1193 (JP)

(56) References cited:
- EP-A- 0 136 057
- EP-A- 0 352 118
- EP-A- 1 092 841
- EP-A- 1 231 418
- WO-A-20/06137182
- FR-A1- 2 728 017
- JP-A- 59 190 575

## Description

### Technical Field

The present invention relates to an oil seal, one of sealing apparatuses, and more specifically relates to the oil seal suitable for use as a valve stem seal.

### Background Art

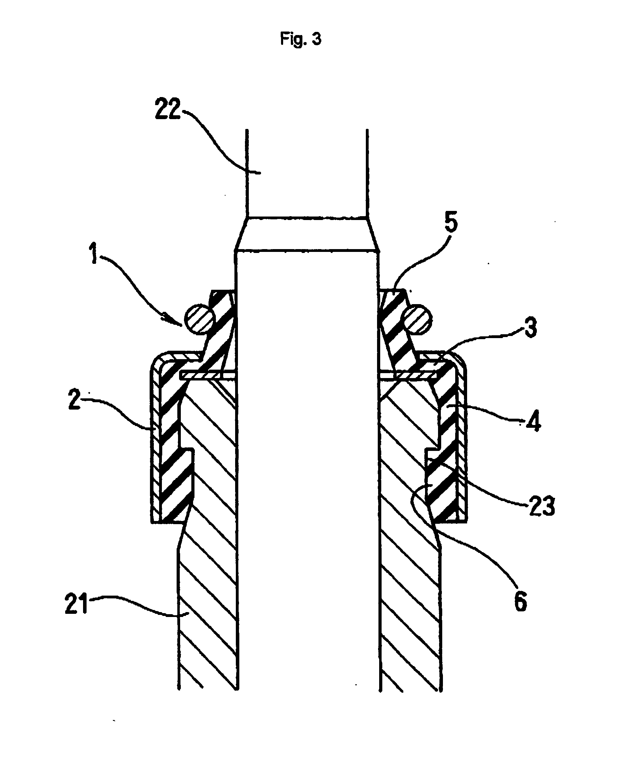

Traditionally, a valve stem oil seal 1 shown in Fig. 3 is known as a type of oil seal. This oil seal 1 is fitted into an outer peripheral side of a valve stem guide 21, which is a tubular attachment part, from one side (upside) in the axial direction, and is provided with a metal ring 2, and a rubber elastic body 3 deposited on this metal ring 2. Wherein the rubber elastic body 3 is provided with a rubber fitting part 4 deposited on an inner peripheral surface of the metal ring 2 and fitted into an outer peripheral surface of the valve stem guide 21, and a seal lip 5 closely contacted with a valve stem 22, which is a partner member, and wherein a protruded engaging part 6 engaging to a grooved engaging part 23 provided on the outer peripheral surface of the valve stem guide 21 is provided on an inner peripheral surface of the rubber fitting part 4 as a retainer of the oil seal 1. Moreover, the rubber fitting part 4 is designed to allow an easy mounting to the valve stem guide 21 with a low fitting force, so that hand assembling (mounting by manual procedures) can be performed.

In the above described prior art, as aforestated, the rubber fitting part 4 is designed to be mounted to the valve stem guide 21 with a low fitting force enabling hand mounting, at the same time however, due to the low fitting force (load), it is difficult to feel (hand-sensing) whether or not the oil seal 1 is securely mounted in the normal position (where the protruded engaging part 6 is fitted into the grooved engaging part 23). Hence, after the mounting, a follow-up visual inspection work for confirming whether or not the fitting part is securely mounted in the normal position is required, posing a problem that the mounting efficiency is compromised. Yet, the above described fitting force can be increased to enhance the sensing at the time of mounting, in such event however, the hand mounting itself becomes more difficult and therefore such approach can not be adopted.

Patent Literature 1: Unexamined Japanese Patent Publication JP 11-350927 A. EP 0 352 118 A1 shows hydrodynamic shaft seals for use as rotary shaft seals. JP 59190575 A shows a low torque seal for rotary members. WO 2006/137182 A1 shows a seal in contact with a rotating shaft. FR 2 728 017 A shows an assembly comprising a metal ring comprising teeth. EP 1 092 841 A1 shows an assembly comprising a fitting part made of rubber.

### Disclosure of the Invention

The present invention, in consideration of the aforestated aspects, aims to provide an oil seal that allows to enhance the sensing at the time of hand mounting without increasing the fitting force required to mount the tubular attachment part, thereby the follow-up visual inspection work after the mounting can be eliminated.

### Means for Solving the Problem

To achieve the above described purpose, an oil seal according to claim 1 of this invention can be an oil seal fitted into an outer peripheral side of an tubular attachment part from one side in the axial direction, having a metal ring and a rubber elastic body deposited on said metal ring, wherein said rubber elastic body is provided with a rubber fitting part deposited on an inner peripheral surface of said metal ring and fitted into an outer peripheral surface of said tubular attachment part, and a seal lip closely contacted with a partner member, wherein a grooved engaging part engaging to a protruded engaging part provided on an outer peripheral surface of said tubular attachment part is provided on an inner peripheral surface of said rubber fitting part, and wherein a coating is applied over the inner peripheral surface of said rubber fitting part including said protruded engaging part.

Moreover, the assembly can be characterised in that the tubular attachment part is the valve stem guide, and that the said relevant oil seal is the valve stem oil seal that allows the seal lip to closely contact with the valve stem, in the oil seal as set forth in aforestated claim 1.

When fitting the oil seal to the outer peripheral side of the tubular attachment part from one side in the axial direction, the inner peripheral surface of the rubber fitting part slides over the outer peripheral surface of the tubular attachment part. Hence, when a PTFE coating is applied over the inner peripheral surface of this rubber fitting part, due to the properties the coating, the coefficient of friction is reduced, and the rubber fitting part is surface hardened, thereby the instantaneous force (load) difference becomes greater upon when the protruded engaging part is fitted into the grooved engaging part.
In case of a rubber material without the PTFE coating, the force (load) variation is gentle due to the rubbers elastic deformation, making it difficult to sense the variation by hand, on the contrary, according to the present invention, the force (load) greatly changes momentarily, making it easy to sense the variation by hand.

### Effect of the Invention

The present invention produces the following effect.

More specifically, in the oil seal according to claim 1 of this invention, as aforestated, a coating is applied over the inner peripheral surface of the rubber fitting part including the protruded engaging part, thereby the coefficient of friction is reduced, and the rubber fitting part is surface hardened, thereby the force (load) difference (force (load) reduction amount) becomes greater upon when the protruded engaging part is fitted into the grooved engaging part, allowing the mounting feel ("JUST' feel) to be strongly felt. Hence, as intended by the present invention, the follow-up visual inspection work after the mounting can be eliminated and the mounting efficiency can be improved. Moreover, the fitting force thereof is not increased, thereby no deterioration in the mounting efficiency can occur.

### Brief Description of the Drawings

Fig. 1 A half cut view of an oil seal according to the Example of this invention
Fig. 2 A half cut view showing the same oil seal mounting state
Fig. 3 A cross-sectional view showing the mounting state of an oil seal according to the conventional example.

### Best Mode for Carrying Out the Invention.

Hereinafter, the Example of this invention will be described with the reference to drawings.

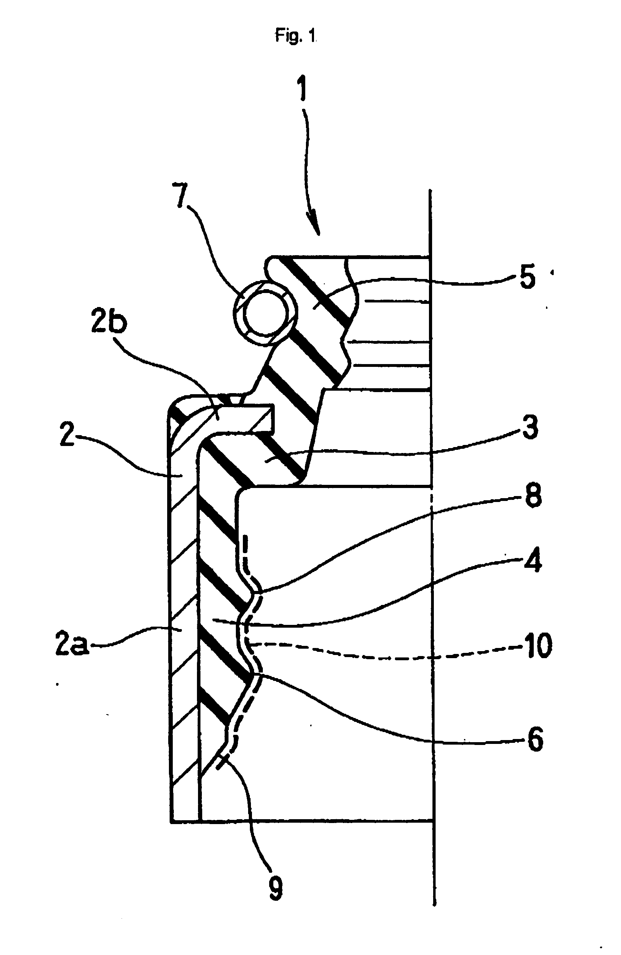

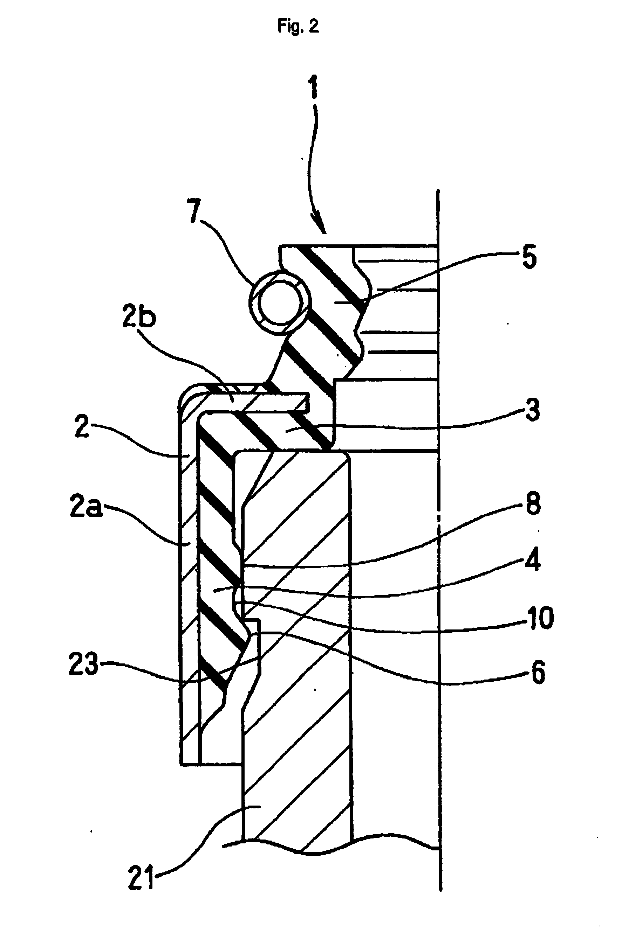

Fig. 1 shows a half-cut drawing of the oil seal 1 according to the Example of this invention. Also, Fig. 2 shows a section in a mounted state.

The oil seal 1 according to the said relevant Example is used as a valve stem oil seal, and is constituted as follows:

That is, firstly, the rubber elastic body 3 is deposited (vulcanization adhesion) on the metal ring 2 mounted to the outer peripheral side of the valve stem guide 21, which is a tubular attachment part, from one side (upside) in the axial direction, and through the use of this rubber elastic body 3, the rubber fitting part 4 deposited on the inner peripheral surface of the metal ring 2 and fitted into the outer peripheral surface of the valve stem guide 21, and the seal lip 5 slidably and closely contacted with a valve stem (not shown), which is a partner member, are formed together integrally. The metal ring 2 is formed by integrally molding an inward flange part 2b at the upper end of a tubular part 2a. Also, a spring (garter spring) 7 is attached by fitting into the seal lip 5.

On the inner peripheral surface of the rubber fitting part 4, the protruded engaging part (projection) 6 axially engaging to the grooved engaging part 23 provided on the outer peripheral surface of the valve stem guide 21, is provided as a retainer of the oil seal 1, and a protruded seal part (projection) 8 is provided at the upside position thereof as a seal for the said relevant part. Also, a tapered surface guide part 9 is provided at the lower end part of the rubber fitting part 4 in order to make the fitting process into the valve stem guide 21 easier, and furthermore, the rubber fitting part 4 as a whole is designed to be mounted to the valve stem guide 21 with a low fitting force.

When mounting the above described the oil seal 1 to the valve stem guide 21, hand assembly is performed as stated above, and the valve stem guide 21 is designed for a low fitting force application, resulting in a weak mounting feel ("JUST" feel), which is also stated above. Given these factors, in the present invention, it was decided that the PTFE (polytetrafluoroethylene) coating 10 is applied over the inner peripheral surface of the rubber fitting part 4 to improve the mounting efficiency. In the said relevant Example, this coating 10 is applied over the approximately entire inner peripheral surface of the rubber fitting part 4 including the guide part 9, the protruded engaging part 6 and the protruded seal part 8 as shown by the dotted line in the Figure.

As described above, when the PTFE coating 10 is applied over the inner peripheral surface of the rubber fitting part 4, due to the properties of the coating, the coefficient of friction is reduced, and at the same time, the inner peripheral surface of the rubber fitting part 4 is surface hardened, thereby, the instantaneous force (load) difference becomes greater upon when the protruded engaging part 6 is fitted into the grooved engaging part 23 allowing an operator to strongly feel the mounting feel ("JUST" feel). Hence, the follow-up visual inspection work after the mounting can be eliminated and the mounting efficiency can be improved. Moreover, the fitting force thereof is not increased, thereby no deterioration in the mounting efficiency can occur.

Yet, in the above described Example, although it was decided that the PTFE coating 10 is applied over the approximately entire inner peripheral surface of the rubber fitting part 4 including the guide part 9, the protruded engaging part 6 and the protruded seal part 8, the coating may also be applied only over a part of the same inner peripheral surface as well. However, it is necessary the coating to be applied over the inner peripheral surface of the protruded engaging part 6 at minimum.

Moreover, the above-described constitution of this invention can be applied to oil seals other than the valve stem oil seals.

### Description of Notation

- 1:: Oil seal
- 2;: Metal ring
- 2a:: Tubular part
- 2b:: Flange part
- 3:: Rubber elastic body
- 4:: Rubber fitting part
- 5:: Seal lip
- 6:: Protruded engaging part
- 7:: Spring
- 8:: Protruded seal part
- 9:: Guide part
- 10:: PTFE coating
- 21:: Valve stem guide
- 22:: Valve stem
- 23:: Grooved engaging part

## Claims

1. An assembly comprising an oil seal (1) having a metal ring (2) and a rubber elastic body (3) deposited on said metal ring (2), wherein said rubber elastic body (3) is provided with a rubber fitting part (4) deposited on an inner peripheral surface of said metal ring (2), a seal lip (5) for closely contacting with a partner member, and a protruded engaging part (6) which is provided on an inner peripheral surface of said rubber fitting part (4), wherein the oil seal (1) is fitted into an outer peripheral side of a tubular attachment part from one side in the axial direction, whereas the fitting part (4) deposited on an inner peripheral surface of said metal ring (2) is fitted into an outer peripheral surface of said tubular attachment part, and the seal lip (5) closely contacted with a partner member, wherein the protruded engaging part (6) engaging to a grooved engaging part (23) provided on the outer peripheral surface of said tubular attachment part is provided on an inner peripheral surface of said rubber fitting part (4), **characterised in that** a coating (10) for reducing the coefficient of friction is applied over the inner peripheral surface of said rubber fitting part (4) including said protruded engaging part (6).

2. An assembly according to claim 1, wherein the coating (10) is a PTFE coating (10).

3. An assembly according to one of the claims 1 or 2, wherein a protruded seal part (8) is provided at an upside position of the engaging part (6).

4. An assembly according to one of the claims 1 to 3, wherein a tapered surface guide part (9) is provided at the lower end part of the rubber fitting part (4).

5. An assembly according to one of the claims 1 to 4, wherein a spring (7) is attached by fitting into the seal lip (5).

6. An assembly according to one of the claims 1 to 5, wherein the metal ring (2) is formed by integrally molding an inward flange part (2b) at the upper end of a tubular part (2a).

7. An assembly according to on of the claims 1 to 6, wherein the tubular attachment part is a valve stem guide (21), and said oil seal (1) is a valve stem oil seal that allows the seal lip (5) to closely contact with a valve stem.

## Patentansprüche

1. Anordnung, die eine Öldichtung (1) mit einem Metallring (2) und einem gummielastischen Körper (3) umfasst, der an dem Metallring (2) angeordnet ist, wobei der gummielastische Körper (3) mit einem Gummipassteil (4), der an einer Innenumfangsfläche des Metallrings (2) angeordnet ist, einer Dichtlippe (5) zur engen Berührung eines Gegenglieds, und einem vorragenden Eingriffsteil (6), der an einer Innenumfangsfläche des Gummipassteils (4) vorgesehen ist, versehen ist, wobei die Öldichtung (1) von einer Seite in Axialrichtung in eine Außenumfangsseite eines röhrenförmigen Befestigungsteils eingebracht ist, während der an einer Innenumfangsfläche des Metallrings (2) angeordnete Passteil (4) in eine Außenumfangsfläche des röhrenförmigen Befestigungsteils eingebracht ist und die Dichtlippe (5) in enge Berührung mit einem Gegenglied gebracht ist, wobei der vorragende Eingriffsteil (6), der mit einem an der Außenumfangsfläche des röhrenförmigen Befestigungsteils vorgesehenen genuteten Eingriffsteil (23) in Eingriff gebracht ist, an einer Innenumfangsfläche des Gummipassteils (4) vorgesehen ist, **dadurch gekennzeichnet, dass** eine Beschichtung (10) zur Reduzierung des Reibungskoeffizienten auf die Innenumfangsfläche des Gummipassteils (4), einschließlich des vorragenden Eingriffsteils (6), aufgebracht ist.

2. Anordnung nach Anspruch 1, wobei die Beschichtung (10) eine PTFE-Beschichtung (10) ist.

3. Anordnung nach einem der Ansprüche 1 oder 2, wobei ein vorragender Dichtungsteil (8) in einer Oberseitenposition des Eingriffsteils (6) vorgesehen ist.

4. Anordnung nach einem der Ansprüche 1 bis 3, wobei ein Führungsteil (9) mit konischer Fläche am unteren Endteil des Gummipassteils (4) vorgesehen ist.

5. Anordnung nach einem der Ansprüche 1 bis 4, wobei eine Feder (7) durch Einbringen in die Dichtlippe (5) befestigt ist.

6. Anordnung nach einem der Ansprüche 1 bis 5, wobei der Metallring (2) durch integrales Formen eines einwärtigen Flanschteils (2b) am oberen Ende eines röhrenförmigen Teils (2a) gebildet ist.

7. Anordnung nach einem der Ansprüche 1 bis 6, wobei der röhrenförmige Befestigungsteil eine Ventilschaftführung (21) ist und die Öldichtung (1) eine Ventilschaftöldichtung ist, die es der Dichtlippe (5) gestattet, in enge Berührung mit einem Ventilschaft zu treten.

## Revendications

1. Ensemble comprenant un joint à huile (1) comprenant un anneau métallique (2) et un corps élastique en caoutchouc (3) déposé sur ledit anneau métallique (2), dans lequel ledit corps élastique en caoutchouc (3) comprend une partie d'emboîtement en caoutchouc (4) qui est déposée sur une surface périphérique intérieure dudit anneau métallique (2), une lèvre de joint (5) prévue pour entrer en contact intime avec un élément associé, et une partie d'engagement saillante (6) qui est prévue sur une surface périphérique intérieure de ladite partie d'emboîtement en caoutchouc (4), dans lequel le joint à huile (1) est emboîté dans un côté périphérique extérieur d'une partie de fixation tubulaire à partir d'un côté dans la direction axiale, tandis que la partie d'emboîtement (4) qui est déposée sur une surface périphérique intérieure dudit anneau métallique (2) est emboîtée dans une surface périphérique extérieure de ladite partie de fixation tubulaire, et la lèvre de joint (5) est placée en contact intime avec un élément associé, dans lequel la partie d'engagement saillante (6) qui s'engage dans une partie d'engagement rainurée (23) prévue sur la surface périphérique extérieure de ladite partie de fixation tubulaire est formée sur une surface périphérique intérieure de ladite partie d'emboîtement en caoutchouc (4),
**caractérisé en ce qu'**un revêtement (10) destiné à réduire le coefficient de friction est appliqué sur la surface périphérique intérieure de ladite partie d'engagement en caoutchouc (4) qui comporte ladite partie d'engagement saillante (6).

2. Ensemble selon la revendication 1, dans lequel le revêtement (10) est un revêtement de PTFE (10).

3. Ensemble selon l'une quelconque des revendications 1 ou 2, dans lequel une partie de joint saillante (8) est prévue à une position supérieure de la partie d'engagement (6).

4. Ensemble selon l'une quelconque des revendications 1 à 3, dans lequel une partie de guidage de surface conique (9) est prévue à la partie d'extrémité inférieure de la partie d'emboîtement en caoutchouc (4).

5. Ensemble selon l'une quelconque des revendications 1 à 4, dans lequel un ressort (7) est attaché par emboîtement dans la lèvre de joint (5).

6. Ensemble selon l'une quelconque des revendications 1 à 5, dans lequel l'anneau métallique (2) est formé en moulant intégralement une partie de bride intérieure (2b) à l'extrémité supérieure d'une partie tubulaire (2a).

7. Ensemble selon l'une quelconque des revendications 1 à 6, dans lequel la partie de fixation tubulaire est un guide de tige de soupape (21), et ledit joint à huile (1) est un joint à huile de tige de soupape qui permet à la lèvre de joint (5) de se trouver en contact intime avec une tige de soupape.
